# EUROPÄISCHE PATENTSCHRIFT

(11) **EP 1 477 508 B1**
(45) Veröffentlichungstag und Bekanntmachung des Hinweises auf die Patenterteilung: **23.04.2008**
(21) Anmeldenummer: 04010355.8
(22) Anmeldetag: 30.04.2004
(51) Int. Cl.: C08G 64/30, C08G 18/44, C08G 63/64

(54) **Ytterbium(III)acetylacetonat als Katalysator zur Herstellung von aliphatischen Oligocarbonatpolyolen**
Ytterbium(III)acetylacetonate as catalyst for the preparation of aliphatic oligocarbonate-polyols
Acetylacetonate d'ytterbium(III) comme catalyseur pour la préparation de polyols aliphatiques oligocarbonate

(30) Priorität: 12.05.2003 DE 10321149
(43) Veröffentlichungstag der Anmeldung: 17.11.2004
(73) Patentinhaber: Bayer MaterialScience AG, 51368 Leverkusen (DE)
(72) Erfinder: Hofacker, Steffen Dr., 51519 Odenthal (DE)

(56) Entgegenhaltungen:
- US-A- 5 208 297
- US-A1- 2002 082 363

## Beschreibung

Die vorliegende Erfindung betrifft die Verwendung von Ytterbium(III)acetylacetonat als Katalysator zur Herstellung aliphatischer Oligocarbonatpolyole durch Umesterung von organischen Carbonaten mit aliphatischen Polyolen.

Oligocarbonatpolyole sind wichtige Vorprodukte, beispielsweise bei der Herstellung von Kunststoffen, Lacken und Klebstoffen. Sie werden z.B. mit Isocyanaten, Epoxiden, (cyclischen) Estern, Säuren oder Säureanhydriden umgesetzt (DE-A 1 955 902). Sie können prinzipiell aus aliphatischen Polyolen durch Umsetzung mit Phosgen (z.B. DE-A 1 595 446), bis-Chlorkohlensäureestern (z.B. DE-A 857 948), Diarylcarbonaten (z.B. DE-A 1 01 2557), cyclischen Carbonaten (z.B. DE-A 2 523 352) oder Dialkylcarbonaten (z.B. WO 2003/2630) hergestellt werden.

Es ist bekannt, dass bei Umsetzung von Arylcarbonaten wie Diphenylcarbonat mit aliphatischen Polyolen wie 1,6-Hexandiol ein hinreichender Reaktionsumsatz allein durch Entfernung der freiwerdenden alkoholischen Verbindung (z.B. Phenol) im Zuge der Gleichgewichtsverlagerung der Reaktion erreicht werden kann (z.B. EP-A 0 533 275).

Kommen jedoch Alkylcarbonate (z.B. Dimethylcarbonat) zum Einsatz, so werden häufig Umesterungskatalysatoren eingesetzt, z.B. Alkali- oder Erdalkali-Metalle sowie deren Oxide, Alkoxide, Carbonate, Borate oder Salze organischer Säuren (z.B. WO 2003/2630).

Darüber hinaus werden bevorzugt Zinn oder Zinn-organische Verbindungen wie Bis(tributylzinn)oxid, Dibutylzinnlaurat oder aber auch Dibutylzinnoxid (DE-A 2 523 352) sowie Verbindungen des Titans wie Titantetrabutylat, Titantetraisopropylat oder Titandioxid als Umesterungskatalysatoren verwendet (z.B. EP-B 0 343 572, WO 2003/2630).

Die aus dem Stand der Technik bekannten Umesterungskatalysatoren zur Herstellung von aliphatischen Oligocarbonatpolyolen durch Umsetzung von Alkylcarbonaten mit aliphatischen Polyolen weisen aber einige Nachteile auf.

In jüngster Zeit wurden Zinn-organische Verbindungen als potentielle Cancerogene beim Menschen erkannt. Sie sind somit unerwünschte Bestandteile, die auch in Folgeprodukten der Oligocarbonatpolyole verbleiben, sofern die bisher bevorzugten Verbindungen wie Bis(tributylzinn)oxid, Dibutylzinnoxid oder Dibutylzinnlaurat als Katalysatoren zum Einsatz kommen.

Bei Verwendung von starken Basen wie Alkali- oder Erdalkali-Metallen oder deren Alkoxiden ist es notwendig, nach erfolgter Oligomerisierung die Produkte in einem zusätzlichen Prozessschritt zu neutralisieren. Werden hingegen Ti-Verbindungen als Katalysatoren verwendet, so kann es bei Lagerung des resultierenden Produktes zu unerwünschten Verfärbungen (Gelbfärbung) kommen, was u.a. durch die Anwesenheit von Ti(III)-Verbindungen neben Ti(IV)-Verbindungen und/oder durch die Komplexbildungsneigung des Titans hervorgerufen wird.

Neben dieser unerwünschten Verfärbungseigenschaft weisen Titan-haltige Katalysatoren bei der weiteren Umsetzung der hydoxylterminierten Oligocarbonate als Polyurethanrohstoff eine hohe Aktivität gegenüber Isocyanatgruppen-haltigen Verbindungen auf. Besonders ausgeprägt ist diese Eigenschaft bei Umsetzung der Titan katalysierten Oligocarbonatpolyole mit aromatischen (Poly)Isocyanaten bei erhöhter Temperatur, wie dies beispielsweise bei der Herstellung von Gießelastomeren oder von thermoplastischen Polyurethanen (TPU) der Fall ist. Dieser Nachteil kann soweit führen, dass aufgrund des Einsatzes von Titan-haltigen Oligocarbonatpolyolen die Topfzeit bzw. Reaktionszeit des Reaktionsgemisches derart verkürzt wird, dass eine Verwendung solcher Oligocarbonatpolyole für diese Anwendungsgebiete nicht mehr möglich ist. Zur Vermeidung dieses Nachteils wird der im Produkt verbleibende Umesterungskatalysator nach abgeschlossener Synthese in mindestens einem zusätzlichen Produktionsschritt weitestgehend inaktiviert.

EP-B 1 091 993 lehrt die Inaktivierung durch Zusatz von Phosphorsäure, während US-A 4 891 421 eine Inaktivierung auch durch Hydrolyse der Titanverbindungen vorschlägt, wobei eine entsprechende Menge Wasser dem Produkt zugesetzt und nach erfolgter Desaktivierung destillativ wieder aus dem Produkt entfernt wird.

Weiterhin ist es mit den bisher verwendeten Katalysatoren nicht möglich gewesen, die Reaktionstemperatur, die üblicherweise zwischen 150°C und 230°C liegt, zu senken, um die Bildung von Nebenprodukten wie Ethern oder Vinylgruppen, die bei erhöhter Temperatur entstehen können, weitgehend zu vermeiden. Diese unerwünschten Endgruppen führen als Kettenabbrecher für nachfolgende Polymerisationsreaktionen, z.B. im Falle der Polyurethanreaktion mit mehrfachfunktionellen (Poly)Isocyanaten, zu einer Erniedrigung der Netzwerkdichte und damit zu schlechteren Produkteigenschaften (z.B. Lösemittel- oder Säurebeständigkeit).

Darüber hinaus weisen Oligocarbonatpolyole, die mit Hilfe der aus dem Stand der Technik bekannten Katalysatoren hergestellt wurden, hohe Gehalte an Ethergruppen (z.B. Methyl-, Hexylether etc.) auf. Diese Ethergruppen in den Oligocarbonatpolyolen führen jedoch dazu, daß z.B. die Heißluftbeständigkeit von Gießelastomeren auf Basis solcher Oligocarbonatpoylole unzureichend ist, da Etherbindungen im Material unter diesen Bedingungen gespalten werden und so zu einem Versagen des Materials führen.

Aufgabe der vorliegenden Erfindung war es daher, geeignete Katalysatoren für die Umesterungsreaktion von organischen Carbonaten, insbesondere Dialkylcarbonaten, mit aliphatischen Polyolen zur Herstellung von aliphatischen Oligocarbonatpolyolen bereitzustellen, welche die oben genannten Nachteile nicht aufweisen.

Es wurde nun gefunden, dass Ytterbium(III)acetylacetonat ein solcher Katalysator ist.

Gegenstand der vorliegenden Erfindung ist die Verwendung von Ytterbium(III)acetylacetonat als Umesterungskatalysator zur Herstellung von aliphatischen Oligocarbonatpolyolen mit einem zahlenmittleren Molekulargewicht von 500 bis 5000 g/mol aus aliphatischen Polyolen und organischen Carbonaten.

Der erfindungsgemäß verwendete Katalysator kann sowohl als Feststoff als auch in Lösung - z.B. gelöst in einem der Edukte - eingesetzt werden.

Die Konzentration des erfindungsgemäß verwendeten Katalysators beträgt 0,01 ppm bis 10000 ppm, bevorzugt 0,1 ppm bis 5000 ppm besonders bevorzugt 0,1 ppm bis 1000 ppm, bezogen auf die Gesamtmasse der eingesetzten Edukte.

Die Reaktionstemperatur bei der Umesterungsreaktion beträgt 40°C bis 250°C, bevorzugt 60°C bis 230°C, besonders bevorzugt 80°C bis 210°C.

Die Umesterungsreaktion kann sowohl unter Atmosphärendruck als auch unter vermindertem oder erhöhtem Druck von 10⁻³ bis 10³ bar durchgeführt werden.

Als organische Carbonate können z.B. Aryl-, Alkyl- oder Alyklencarbonate, die durch ihre einfache Herstellbarkeit und gute Verfügbarkeit bekannt sind, verwendet werden. Als Beispiele seien genannt: Diphenylcarbonat (DPC), Dimethylcarbonat (DMC), Diethylcarbonat (DEC), Ethylencarbonat, etc.

Bevorzugt werden Diphenylcarbonat, Dimethylcarbonat oder Diethylcarbonat eingesetzt. Ganz besonders bevorzugt werden Diphenylcarbonat oder Dimethylcarbonat verwendet.

Als Reaktionspartner der organischen Carbonate können aliphatische Alkohole mit 2 bis 100 C-Atomen (linear, cyclisch, verzweigt, unverzweigt, gesättigt oder ungesättigt) mit einer OH-Funktionalität ≥ 2 (primär, sekundär oder tertiär) eingesetzt werden.

Als Beispiele seien genannt: Ethylenglykol, 1,3-Propylenglykol, 1,3-Butandiol, 1,4-Butandiol, 1,5-Pentandiol, 1,6-Hexandiol, 2-Ethyl-Hexandiol, 3-Methyl-1,5-Pentandiol, Cylohexandimethanol, Trimethylolpropan, Pentaerythrit, Dimerdiol, Diethylenglykol etc.

Ebenso können erfindungsgemäß Polyole eingesetzt werden, die aus einer Ringöffnungsreaktion eines Lactons oder Epoxids mit einem aliphatischen Alkohol (linear, cyclisch, verzweigt, unverzweigt, gesättigt oder ungesättigt) mit einer OH-Funktionalität ≥ 2 (primär, sekundär oder tertiär) erhältlich sind, z.B. das Addukt aus ε-Caprolacton und 1,6 Hexandiol oder ε-Caprolacton und Trimethylolpropan sowie deren Mischungen.

Schließlich können auch Mischungen verschiedener oben erwähnter Polyole als Edukte eingesetzt werden.

Bevorzugt sind aliphatische oder cycloaliphatische verzweigte oder unverzweigte, primäre oder sekundäre Polyole mit einer OH-Funktionalität ≥ 2. Besonders bevorzugt sind aliphatische, verzweigte oder unverzweigte, primäre Polyole mit einer Funktionalität ≥ 2.

Bei Verwendung des erfindungsgemäßen Katalysators kann auf eine abschließende Desaktivierung des Umesterungskatalysators durch z.B. Zusatz von Maskierungsmitteln wie z.B. Phosphorsäure, Dibutylphosphat, Oxalsäure, etc. oder Fällungsreagienzien, wie z.B. Wasser verzichtet werden. Die resultierenden Ytterbium-haltigen Oligocarbonatpolyole sind somit ohne weitere Behandlung als Rohstoffe z.B. für die Polyurethanherstellung geeignet.

Gegenstand der Erfindung sind auch die durch Umesterung von organischen Carbonaten mit aliphatischen Polyolen in Gegenwart von Ytterbium(III)acetylacetonat erhältlichen Oligocarbonatdiole mit einem zahlenmittleren Molekulargewicht von 500 bis 5000 g/mol und die aus ihnen durch Umsetzung mit organischen (Poly)Isocyanaten in stöchiometrischem Überschuss erhältlichen NCO-terminierten Prepolymere.

Die in Gegenwart von Ytterbium(III)acetylacetonat hergestellten Oligocarbonatdiole weisen einen niedrigeren Gehalt an Ethergruppen auf als Oligocarbonatdiole, die mit Katalysatoren des Standes der Technik hergestellt wurden. Dies hat unmittelbaren Einfluss auf die Eigenschaften der aus ihnen hergestellten NCO-terminierten Prepolymere. Diese zeigen eine bessere Lagerstabilität als die mit den Oligocarbonatdiolen des Standes der Technik hergestellten Prepolymere. Außerdem weisen aus diesen Oligocarbonatdiolen hergestellte Gießelastomere eine höhere Heißluftbeständigkeit auf.

Es hat sich zudem gezeigt, dass Ytterbiumverbindungen, insbesondere Ytterbium(III)acetylacetonat, auch vorteilhaft zur Katalyse anderer Veresterungs- oder Umesterungsreaktionen eingesetzt werden, beispielsweise zur Herstellung von Polyestern oder Polyacrylaten. Der Katalysator kann dann bei weiteren Umsetzungen im Produkt verbleiben, da er die Reaktion der Polyole mit Polyisocyanaten nicht negativ beeinflusst.

### Beispiele

### Beispiel 1

In einem 20 ml Rollrandglasgefäß wurden Dimethylcarbonat (3,06 g) und 1-Hexanol (6,94 g) im Molverhältnis 1:2 zusammen mit je einer konstanten Menge (5,7- 10⁻⁶ mol) eines Katalysators (siehe Tabelle 1) gemischt und mit einem Septum aus Naturkautschuk inkl. Gasauslass verschlossen. Lag der eingesetzte Katalysator bei Raumtemperatur im festen Aggregatszustand vor, so wurde dieser in einem der Edukte zunächst gelöst. Unter Rühren wurde das Reaktionsgemisch für sechs Stunden auf 80°C erhitzt. Nach Abkühlung auf Raumtemperatur erfolgte eine Analyse des Produktspektrums mittels Gaschromatographie, gegebenenfalls gekoppelt mit massenspektrometrischen Untersuchungen. Die Gehalte an Umsetzungsprodukten, nämlich an Methyl-Hexyl-Carbonat bzw. Dihexylcarbonat, welche als Maß für die Aktivität des verwendeten Umesterungskatalysators aufgefasst werden können, wurden durch integrale Auswertung der jeweiligen Gaschromatogramme quantifiziert. Die Ergebnisse dieser Aktivitätsuntersuchungen sind in Tabelle 1 aufgeführt.

**Tabelle 1**

| Eingesetzte Katalysatoren und Gehalte an Umsetzungsprodukten | | | | |
|---|---|---|---|---|
| Nr. | Katalysator | Gehalt an Methyl-Hexyl-Carbonat [Flächen-%] | Gehalt an Dihexylcarbonat [Fächen-%] | Summe der Gehalte [Flächen-%] |
| 1 | ohne Katalysator | 4,0 | 0,1 | 4,1 |
| 2 | Dibutylzinnoxid | 5,1 | 0,2 | 5,3 |
| 3 | Dibutylzinnlaurat | 3,4 | 0,1 | 3,5 |
| 4 | Bis (tributylzinn) oxid | 3,7 | 0,0 | 3,7 |
| 5 | Titantetraisopropylat | 1,9 | 0,0 | 1,9 |
| 6 | Magnesiumcarbonat | 2,1 | 0,1 | 2,2 |
| 7 | Ytterbium(III)acetyl-acetonat | 23,5 | 5,3 | 28,8 |

### Beispiel 2

In einem 20 ml Rollrandglasgefäß wurden Dimethylcarbonat (4,15 g) und 1,6-Hexandiol (5,85 g) zusammen mit je einer konstanten Menge (5,7·10⁻⁶ mol) eines Katalysators (siehe Tabelle 2) gemischt und mit einem Septum aus Naturkautschuk inkl. Gasauslass verschlossen. Das Molverhälnis vom Dimethylcarbonat und 1,6-Hexandiol wurde so gewählt, dass bei vollständiger Umsetzung ein aliphatisches Oligocarbonatdiol mit einer mittleren Molmasse von 2000 g/mol erhalten wird. Lag der eingesetzte Katalysator bei Raumtemperatur im festen Aggregatszustand vor, so wurde dieser in einem der Edukte zunächst gelöst. Unter Rühren wurde das Reaktionsgemisch für sechs Stunden auf 80°C erhitzt. Nach Abkühlung auf Raumtemperatur wurden die Gehalte an zielgerechten Umsetzungsprodukten (z.B. Monoester, Diester, Oligocarbonatpolyole), welche als Maß für die Aktivität des verwendeten Umesterungskatalysators aufgefasst werden können, zunächst mit Hilfe gaschromatographischer und massenspektometrischer Methoden identifiziert und anschließend durch integrale Auswertung der jeweiligen Gaschromatogramme quantifiziert. Die Ergebnisse dieser Aktivitätsuntersuchungen sind in Tabelle 2 aufgeführt.

**Tabelle 2**

| Eingesetzte Katalysatoren und Gehalte an Umsetzungsprodukten | | |
|---|---|---|
| Nr | Katalysator | Gehalt an Umsetzungsprodukten [Flächen-%] |
| 1 | ohne Katalysator | 4,8 |
| 2 | Dibutylzinnoxid | 8,3 |
| 3 | Dibutylzinnlaurat | 3,3 |
| 4 | Bis (tributylzinn) oxid | 3,9 |
| 5 | Titantetraisopropylat | 1,6 |
| 6 | Magnesiumcarbonat | 4,5 |
| 7 | Ytterbium(III)acetylacetonat | 37,6 |

### Beispiel 3

### Herstellung eines aliphatischen Oligocarbonatdiols mit Ytterbium(III)acetylacetonat

In einem 5 l Druckreaktor mit Destillationsaufsatz, Rührer und Vorlage wurden 1759 g 1,6-Hexandiol mit 0,02 g Ytterbium(III)acetylacetonat vorgelegt. Es wurde ein Stickstoffdruck von 2 bar angelegt und auf 160°C erhitzt. Danach wurden innerhalb von 3 h 1245,5 g Dimethylcarbonat zudosiert, wobei der Druck gleichzeitig auf 3,9 bar anstieg. Danach wurde die Reaktionstemperatur auf 185°C erhöht und das Reaktionsgemisch 1h lang gerührt. Schließlich wurden innerhalb von 3 h weitere 1245,5 g Dimethylcarbonat zudosiert, wobei der Druck auf 7,5 bar anstieg. Nach erfolgter Zugabe wurde weitere 2 h nachgerührt wobei der Druck auf 8,2 bar anstieg. Während des gesamtes Umesterungsprozesses war der Übergang zur Destille und Vorlage immer geöffnet, so dass entstehendes Methanol als Gemisch mit Dimethylcarbonat abdestillieren konnte. Schließlich wurde das Reaktionsgemisch innerhalb von 15 Minuten auf Normaldruck entspannt, die Temperatur wurde auf 150°C gesenkt und es wurde für eine weitere Stunde bei dieser Temperatur weiter abdestilliert. Danach wurde zur Entfernung von überschüssigem Dimethylcarbonat und Methanol sowie zur Entkappung (Nutzbarmachung) der endständigen OH-Gruppen der Druck auf 10 mbar abgesenkt. Nach zwei Stunden wurde schließlich die Temperatur innerhalb von 1 h auf 180°C erhöht und für weitere 4 h gehalten. Das resultierende Oligocarbonatdiol hatte eine OH-Zahl von 5 mg KOH/g.

Der Reaktionsansatz wurde belüftet, mit 185 g 1,6-Hexandiol versetzt und unter Normaldruck für 6 h auf 180°C erhitzt. Anschließend wurde der Druck bei 180°C für 6 h auf 10 mbar abgesenkt.

Nach Belüftung und Abkühlung des Reaktionsansatzes auf Raumtemperatur, erhielt man ein farbloses, wachsartiges Oligocarbonatdiol mit folgenden Kennzahlen: Mₙ = 2000 g/mol; OH-Zahl = 56,5 mg KOH/g; Methylethergehalt: <0,1 Gew.-%; Viskosität: 2800 mPas bei 75°C

### Beispiel 4 (Vergleich)

### Herstellung eines aliphatischen Oligocarbonatdiols unter Verwendung eines aus dem Stand der Technik bekannten Katalysators

In einem 5 l Druckreaktor mit Destillationsaufsatz, Rührer und Vorlage wurden 1759 g 1,6-Hexandiol mit 0,02 g Titantetraisopropylat vorgelegt. Es wurde ein Stickstoffdruck von 2 bar angelegt und auf 160°C erhitzt. Danach wurden innerhalb von 1h 622,75 g Dimethylcarbonat zudosiert, wobei der Druck gleichzeitig auf 3,9 bar anstieg. Danach wurde die Reaktionstemperatur auf 180°C erhöht und weitere 622,75 g Dimethylcarbonat wurden innerhalb 1h zugegeben. Schließlich wurden innerhalb von 2h weitere 1245,5 g Dimethylcarbonat bei 185°C zudosiert, wobei der Druck auf 7,5 bar anstieg. Nach erfolgter Zugabe wurde bei dieser Temperatur eine weitere Stunde gerührt. Während des gesamtes Umesterungsprozesses war der Übergang zur Destille und Vorlage immer geöffnet, so dass entstehendes Methanol im Gemisch mit Dimethylcarbonat abdestillieren konnte. Schließlich wurde das Reaktionsgemisch innerhalb von 15 Minuten auf Normaldruck entspannt, die Temperatur auf 160°C gesenkt und es wurde für eine weitere Stunde bei dieser Temperatur weiter abdestilliert. Danach wurde zur Entfernung von überschüssigem Methanol und Dimethylcarbonat sowie zur Entkappung (Nutzbarbachung) der endständigen OH-Gruppen der Druck auf 15 mbar abgesenkt. Nach weiteren 4 h Destillation bei diesen Bedingungen wurde der Reaktionsansatz belüftet. Das resultierende Oligocarbonatdiol hatte eine OH-Zahl von 116 mg KOH/g. Daraufhin wurde der Reaktionsansatz, mit 60 g Dimethylcarbonat versetzt und bei einem Druck von 2,6 bar für 6 h auf 185°C erhitzt.

Anschließend wurde der Druck bei 185°C für 8 h auf 15 mbar abgesenkt. Nach Belüftung und Konfektionierung des Reaktionsproduktes mit 0,04 g Dibutylphosphat als Katalysatordesaktivator sowie Abkühlung des Reaktionsansatzes auf Raumtemperatur erhielt man ein farbloses, wachsartiges Oligocarbonatdiol mit folgenden Kennzahlen Mₙ = 2000 g/mol; OH-Zahl = 56,5 mg KOH / g; Methylethergehalt: 3,8 Gew.-%; Viskosität: 2600 mPas bei 75°C

Der Ethergehalt des in Beispiel 3 erhaltenen Oligocarbonatdiols ist deutlich niedriger als der des in Beispiel 4 erhaltenen Oligocarbonatdiols. Dies hat unmittelbaren Einfluss auf die Heißluftbeständigkeit von aus diesen Polyolen hergestellten Gießelastomeren.

### Beispiel 5

### Verwendung des aliphatischen Oligocarbonatdiols aus Beispiel 3 als Rohstoff zur Herstellung eines Polyurethanprepolymeren

In einen 250 ml Dreihalskoben mit Rührer und Rückflusskühler wurden 50,24 g Diphenylmethan-4,4'-diisocyanat bei 80°C vorgelegt und 99,76 g auf 80°C erwärmtes aliphatisches Oligocarbonatdiol aus Beispiel 3 wurden langsam unter Stickstoffatmosphäre zugegeben (Äquivalentverhältnis Isocyanat zu Polyol = 1,00: 0,25). Nach beendeter Zugabe wurde 30 Minuten nachgerührt.

Man erhielt ein flüssiges, hochviskoses Polyurethanprepolymer mit folgenden Kenndaten: NCO-Gehalt: 8,50 Gew.-%; Viskosität: 6560 mPas @ 70°C.

Anschließend wurde das Prepolymere weitere 72h bei 80°C gelagert und dann wurden die Viskosität und der NCO-Gehalt überprüft.

Nach Lagerung erhielt man ein flüssiges Produkt mit folgenden Kenndaten: NCO-Gehalt: 8,40 Gew.-%; Viskosität: 6980 mPas @ 70°C (entspricht einer Viskositätszunahme von 6,4 %);

### Beispiel 6 (Vergleich)

### Verwendung des aliphatischen Oligocarbonatdiols aus Beispiel 4 als Rohstoff zur Herstellung eines Polyurethanprepolymeren

In einen 250 ml Dreihalskoben mit Rührer und Rückflusskühler, wurden 50,24 g Diphenylmethan-4,4'-diisocyanat bei 80°C vorgelegt und 99,76 g auf 80°C erwärmtes aliphatisches Oligocarbonatdiol aus Beispiel 4 wurden langsam unter Stickstoffatmosphäre zugegeben (Äquivalentverhältnis Isocyanat zu Polyol = 1,00: 0,25). Nach beendeter Zugabe wurde 30 Minuten nachgerührt.

Man erhielt ein flüssiges, hochviskoses Polyurethanprepolymer mit folgenden Kenndaten: NCO-Gehalt: 8,5 Gew.-% ; Viskosität: 5700 mPas @ 70°C.

Anschließend wurde das Prepolymere weitere 72 h bei 80°C gelagert und dann wurden die Viskosität und der NCO-Gehalt überprüft. Nach Lagerung erhielt man ein festes (vergeltes) Produkt.

Wie aus dem Vergleich der Viskositäten der Beispiele 5 und 6 hervorgeht, steigt die Viskosität des Prepolymeren aus Beispiel 6 bei Lagerung so stark an, dass dieses in den Gelzustand übergeht, während die Zunahme der Viskosität in Beispiel 5 mit 6,4 % weit unterhalb der kritischen Marke von 20 % liegt.

Damit wird deutlich, dass aliphatische Oligocarbonatpolyole, welche unter Verwendung des erfindungsgemäßen Katalysators Ytterbium(III)acetylacetonat hergestellt wurden, eine deutlich geringere und somit vorteilhaftere Aktivität bezüglich der Umsetzung mit (Poly)Isocyanaten zu (Poly)Urethanen aufweisen als solche, die mit Hilfe von aus dem Stand der Technik bekannten Katalysatoren hergestellt wurden, obwohl diese zusätzlich "inaktiviert" wurden.

## Patentansprüche

1. Verwendung von Ytterbium(III)acetylacetonat als Umesterungskatalysator zur Herstellung von aliphatischen Oligocarbonatpolyolen mit einem zahlenmittleren Molekulargewicht von 500 bis 5000 g/mol aus aliphatischen Polyolen und organischen Carbonaten.

2. Verwendung nach Anspruch 1, **dadurch gekennzeichnet, dass** als organische Carbonate Dimethylcarbonat und/oder Diethylcarbonat und/oder Diphenylcarbonat eingesetzt werden.

3. Verwendung nach Anspruch 2, **dadurch gekennzeichnet, dass** als organisches Carbonat Dimethylcarbonat eingesetzt wird.

4. Verwendung nach Anspruch 1, **dadurch gekennzeichnet, dass** als aliphatische Polyole Diole und/oder Triole und/oder Ringöffnungsaddukte aus einen aliphatischen Diol und einem Lacton oder Epoxid eingesetzt werden.

5. Verwendung nach Anspruch 4, **dadurch gekennzeichnet, dass** 1,6 Hexandiol und/oder das Ringöffnungsprodukt aus 1,6 Hexandiol und ε-Caprolacton und/oder Mischungen daraus eingesetzt werden.

6. Verwendung nach Anspruch 1, **dadurch gekennzeichnet, dass** die Katalysatorkonzentration 0,01 ppm bis 10000 ppm, bezogen auf die Masse der eingesetzten Edukte, beträgt.

7. Verwendung nach Anspruch 1, **dadurch gekennzeichnet, dass** der Methylethergehalt der resultierenden aliphatischen Oligocarbonatpolyole kleiner oder gleich 0,2 Gew.-% ist.

8. Oligocarbonatdiole mit einem zahlenmittleren Molekulargewicht von 500 bis 5000 g/mol, erhältlich durch Umesterung von organischen Carbonaten mit aliphatischen Polyolen in Gegenwart von Ytterbium(III)acetylacetonat.

9. NCO-terminiertes Prepolymer, erhältlich durch Umsetzung eines stöchiometrischen Überschusses von organischen (Poly)Isocyanaten mit Oligocarbonatdiolen gemäß Anspruch 8.

## Claims

1. Use of ytterbium(III) acetylacetonate as a transesterification catalyst for the preparation of aliphatic oligocarbonate polyols having a number average molecular weight of from 500 to 5000 g/mol from aliphatic polyols and organic carbonates.

2. Use according to Claim 1, **characterised in that** dimethyl carbonate and/or diethyl carbonate and/or diphenyl carbonate are utilised as organic carbonates.

3. Use according to Claim 2, **characterised in that** dimethyl carbonate is utilised as an organic carbonate.

4. Use according to Claim 1, **characterised in that** diols and/or triols and/or ring-opening products of an addition reaction between an aliphatic diol and a lactone or epoxide are utilised as aliphatic polyols.

5. Use according to Claim 4, **characterised in that** 1,6-hexanediol and/or the ring-opening product of 1,6-hexanediol and ε-caprolactone and/or mixtures thereof is utilised.

6. Use according to Claim 1, **characterised in that** the catalyst concentration is from 0.01 ppm to 10000 ppm, with reference to the mass of the educts which are utilised.

7. Use according to Claim 1, **characterised in that** the methylether content of the resulting aliphatic oligocarbonate polyols is less than or equal to 0.2 wt . % .

8. Oligocarbonate diols having a number average molecular weight of from 500 to 5000 g/mol, obtainable by transesterification of organic carbonates with aliphatic polyols in the presence of ytterbium(III) acetylacetonate.

9. NCO-terminating prepolymer obtainable by the reaction of a stoichiometric excess of organic (poly)isocyanates with oligocarbonate diols according to Claim 8.

## Revendications

1. Utilisation d'acétylacétonate d'ytterbiurm(III) comme catalyseur de transestérification pour la préparation de polyols aliphatiques d'oligo-carbonates possédant un poids moléculaire moyen en nombre compris entre 500 et 5000 g/mol, à partir de polyols aliphatiques et de carbonates organiques.

2. Utilisation selon la revendication 1, **caractérisée en ce que** l'on utilise comme carbonates organiques, du carbonate diméthylique et/ou du carbonate diéthylique et/ou du carbonate diphénylique.

3. Utilisation selon la revendication 2, **caractérisée en ce que** l'on utilise du carbonate diméthylique comme carbonate organique.

4. Utilisation selon la revendication 1, **caractérisée en ce que** l'on utilise comme polyols aliphatiques, des diols et/ou des triols et/ou des adduits d'ouverture de cycle obtenus à partir d'un diol aliphatique et d'une lactone ou d'un époxyde.

5. Utilisation selon la revendication 4, **caractérisée en ce que** l'on utilise du 1,6-hexanediol et/ou le produit d'ouverture de cycle obtenu à partir de 1,6-hexanediol et d'ε-caprolactone et/ou de mélanges de ceux-ci.

6. Utilisation selon la revendication 1, **caractérisée en ce que** la concentration du catalyseur est comprise entre 0,01 et 10 000 ppm par rapport à la masse des éduits mis en oeuvre.

7. Utilisation selon la revendication 1, **caractérisée en ce que** la teneur en éther méthylique des polyols aliphatiques d'oligocarbonates résultants est égale ou inférieure à 0,2 % en poids.

8. Diols d'oligocarbonates possédant un poids moléculaire moyen en nombre compris entre 500 et 5000 g/mol, pouvant être obtenus par transestérification de carbonates organiques avec des polyols aliphatiques en présence d'acétylacétonate d'ytterbium(III).

9. Prépolymère à terminaison(s) NCO pouvant être obtenu par réaction d'un excès stoechiométrique de (poly)isocyanates organiques avec des diols d'oligocarbonates selon la revendication 8.
